# EUROPEAN PATENT APPLICATION

(11) **EP 1 134 604 A2**
(43) Date of publication of application: **19.09.2001**
(21) Application number: 01301666.2
(22) Date of filing: 23.02.2001
(51) Int. Cl.: G02B 6/42, G02B 6/36, H01S 5/022

(54) **A hermetic fiber optic package and a method of mauufacturing same**

(30) Priority: 09.03.2000 US 522044
(71) Applicant: JDS Uniphase Inc., Nepean, Ontario K2G 5W8 (CA)
(72) Inventor: Dickie, William Charles, Jr., Ottawa, Ontario, CA K1M 1Z8 (CA); Lonmo, Osmund Victor, Nepean, Ontario, K2B 8G5 (CA); Burbridge, Douglas Stephen, Ottawa, Ontario K2H 8Z8 (CA); Williams, Kevin S., Nepean, Ontario K2H 8G8 (CA); Clark, Gordon Alexander, Greely, Ontario K4P 1G6 (CA)
(74) Representative: McKechnie, Neil Henry

(57) **Abstract**

Method and kit for making a hermetically sealed package for a fiber optic device (10) enable assembly of the package without having to connect the device with fiber ends inside the casing. The device is pre-assembled and placed in a first split-wall partial housing having partial feedthrough means (22). A second partial annular housing having a venting opening and partial feedthrough means (23) is placed over the first partial housing such that an open package with fiber feedthrough is formed. The feedthrough is then sealed and a cover (32) is placed sealingly over the venting opening.

## Description

### Field of the Invention

This invention relates to a package, particularly a hermetic package, comprising a housing for a fiber optic device or module and a feedthrough therefor, the device comprising at least one optical fiber length. The device may be optical, electrical or of another type.

### Background of the Invention

A hermetic fiber optic package can be produced, according to prior art, by feeding an optical fiber through a one or more holes drilled in the wall of a casing or enclosure. Typically, cylindrical feedthrough means are brazed onto the holes. Once the end or ends of the fibers are inside the casing, an optical device or module can be attached to them by standard methods. The passage of the fiber through the wall is sealed by soldering and then the entire casing is evacuated and sealed. The package thus produced, with at least one length of fiber leading thereto from outside, protects the device within from humidity, dust and other environmental factors.

The above manufacturing procedure is less than satisfactory in view of the tendency to miniaturize optical components. It is quite cumbersome to gain a proper access inside the casing to assemble the optical element or device, such as e.g. an amplifier, with the fiber ends within the confines of the casing. Also, this approach gives rise to problems if a number (array) of optical fibers have to pass through the package.

A PCT published patent application No. WO 98/01783 (Akzo Nobel NV) proposes a a method for making a hermetic fibre optic package by placing an optical fiber or fibers, stripped of its protective jacket, and a solder preform between the sealing surface of a housing and the sealing surface of a lid for the housing, and sealing the assembly by applying heat and pressure so as to press the fibre or fibres into the solder. Thus, the solder forms both the housing seal and the fiber seal at the same time.While the Akzo Nobel solution is useful since it allows for a convenient assembly of a plurality of fibers into the housing in a single step, it makes it difficult to control the hermetic seal since both the sealing of the fibers and the casing takes place simultaneously. It is still desirable to be able to control separately the seal of the fiber with the wall of the enclosure (casing) and the hermetic seal of the casing, while eliminating the drawback of manipulating the assembled components inside the casing.

### Summary of the Invention

According to the invention, there is proposed a method for making a package which package comprises a housing and a feedthrough for a fiber optic device comprising at least one length of fiber attached to the device. The method comprises the following steps:
a) providing a first partial housing having a first circumference,
b) providing a second, open partial housing comprising a second circumference complementary to the first circumference of the first partial housing, and a venting opening,
c) providing a pre-assembled fiber optic device having at least one length of optical fiber attached thereto,
d) mounting said device in said first partial housing such that the length of fiber extends outside the first partial housing, and
e) mounting said second partial housing to said first partial housing by abutting the first and second circumferences together to form a package.

Preferably, the first and/or second partial housing comprise feedthrough means for the passage of the length of the optical fiber. Also preferably, in the step c) above, the at least one fiber length is encased in a protective tubular structure and sealed therein before the device is placed in the first partial housing.

Typically, once the assembly as in steps a-d above is completed, the feedthrough is sealed e.g. by molding a mass of fusible metal or alloy around the fiber in the feedthrough bore to secure the fiber.

To create a hermetic package, the venting opening is sealed by applying a cover thereon and sealing it by soldering, seam welding or an equivalent technique.

The second, open partial housing may define an annular structure which may be highly irregular. While the second circumference must be sized and shaped to match the first circumference of the first partial housing, the placement of the venting opening has almost no restrictions, as long as the application of a sealing cover (or another sealing means) is feasible. It will be understood that the provision of a venting opening does not preclude the provision of another opening such as for example an inspection opening that may eventually be sealed to provide a hermetic package.

The first partial housing may have a venting opening as well, to be closed or sealed with separate means, but this measure is redundant since only one venting opening is required.

It will be understood, for the purpose of the present invention, that the first and second partial housing define a three-dimensional enclosure sized to accommodate in a desired manner the element or device such as a fiber optic element. In a preferable embodiment of the invention, both the first and the second partial housing define three-dimensional chambers sized to jointly accommodate the fiber optic device, with the length or lengths of fiber extending beyond the package.

In another aspect of the invention, there is provided a kit for making a package, especially a fiber optic package, which package comprises a housing for a fiber optic device and a feedthrough for at least one optical fiber attached to the device. The kit comprises:
a first partial housing sized to accommodate said device, the housing defining a three-dimensional chamber and a first periphery which comprises a partial feedthrough means,
a second doubly open partial housing defining a three-dimensional chamber and having a second periphery that matches the first periphery, the second periphery having a second partial feedthrough means,
means for bonding the second partial housing to the first partial housing such that the first and second peripheries abut each other, and
means for sealing the second partial housing.

Preferably, the bonding means between the first and second partial housing is such as to provide a hermetic seal which is desirable for a fiber optic package..

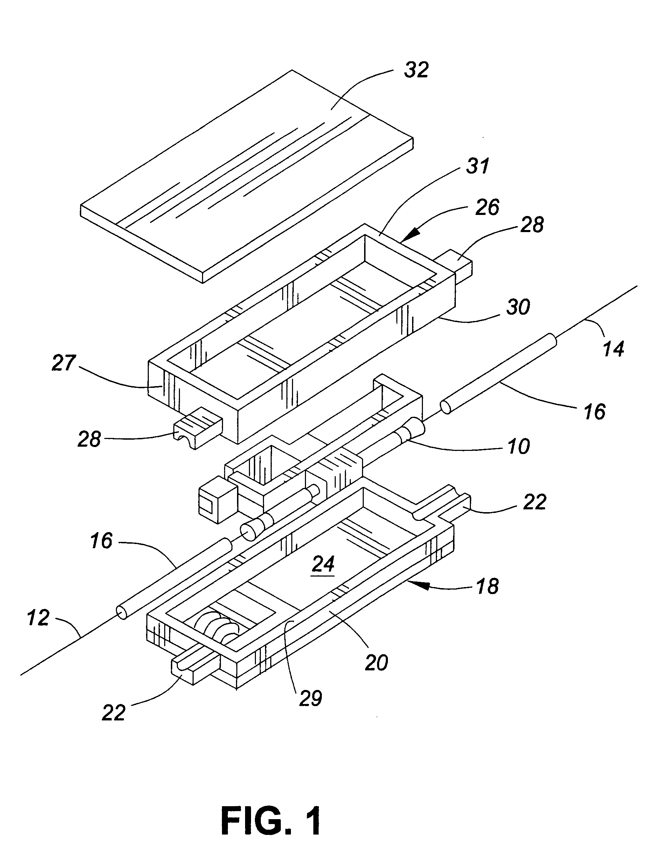

### Brief Description of the Drawing

The invention will be explained in more detail by way of a description to be taken in conjunction with the drawing in which the single figure illustrates, in a perspective exploded view, a fiber optic package.

### Detailed Description of the Invention

The package kit as illustrated consists of a fiber optic device, e.g. a fiber optic amplifier 10 having an input fiber 12 and an output fiber 14. A section of each fiber is sealed into a brass tube 16 to form a hermetic seal to the fibre. To this end, the fiber is placed into the tube, and then a fusible metal which exhibits expansion upon solidification is placed, in a molten state, around the fibre. Upon solidification, the expansion of the metal creates a compression seal around the glass. Brass tube is chosen for ease of soldering.

A package base 18 has a side wall 20 around its circumference and two split feedthroughs 22. The bottom of the base 18 is normally closed, in assembled state, by a bottom plate 24. The wall 20 and the bottom plate 24 define a chamber that is sized to accommodate a part of the device 10.

The package further includes a ring-shaped top frame 26 having a wall 27 with two split feedthroughs 28. The frame 26 has a lower circumference 30 that matches the top edge 29 of the base 18 so that, when the frame 26 is brought together with the base 18, they form a matching enclosure that can be sealed. In this position, the split feedthroughs 22 match the split feedthroughs 28 to define tubular sleeves for the input fiber and the output fiber with the metal tubes 16.

The wall 27 of the top frame defines another chamber that is sized to accommodate, along with the chamber defined by the base 18, the device 10 with end portions of the fibers 12, 14.

A cover 32 is sized to cover the top frame 26 to form a hermetic seal e.g. by soldering to the upper circumference 31 of the frame 26.

The assembly of the package is preceded by assembly of the fiberoptic device 10, without the geometric constraints of the casing 18, 26. The assembled device with the fibers 12, 14 encased in brass tubes 16 is then placed within the base 18 such that the metal tubes 16 are placed in the two split feedthroughs 22. Further, the top frame 26, without the cover 32, is applied onto the base 18 such that the respective circumferences 29, 30 abut each other and the respective feedthroughs form two tubular sleeves accommodating the brass tubes with fiber lengths.

The sealing of the tubular feedthrough sleeves can now be completed, e.g. by soldering, to provide a sealed mounting of the fibers and the brass tubes in the feedthroughs 22,28.
Any hermetic sealing method may be used for this purpose.

It is desirable to test the quality of the feedthrough seal before the cover 32 is applied. To this effect, for example, a temporary closure can be applied over the upper circumference 31 of the second housing 26. The temporary closure, not shown in the drawing, may be connected to a source of vacuum and to a vacuum gauge, or other means of leak detection.

Once the feedthrough seal is tested, the cover 32 is applied over the top periphery 31 of the top frame 26 while the interior of the package is optionally evacuated.

It will be understood that the definition "venting opening" is not limiting the size and shape of the opening nor its function. The opening may be as large as the matching circumferences of the partial housings which allows good visual inspection or access if necessary.

The complementary circumferences as well as the edge of the venting opening preferably, but not necessarily, define planes for easy manufacturing and assembly.

It will be noted that the above-described procedure and split-frame kit are advantageous over the prior art that requires attaching the fibers (fed through holes in the casing) to the device within the casing. It is also advantageous with respect to the Akzo Nobel invention, supra, in that it affords a convenient two-step sealing of the package and step-wise testing of the seal. In other words, the sealing of the fibers into the feedthroughs can be completed before the closing and sealing of the entire package takes place. The latter, without simultaneous sealing of fibers in the feedthroughs, is a straightforward procedure generating relatively little heat from soldering.

## Claims

1. A method of making a package for a fiber optic device which package comprises a housing and a feedthrough for at least one optical fiber, the method comprising the steps of
a) providing a first partial housing having a first circumference,
b) providing a second, open partial housing comprising a second circumference complementary to the first circumference of the first partial housing, and a venting opening,
c) providing a pre-assembled fiber optic device having at least one length of optical fiber attached thereto,
d) mounting said device in said first partial housing such that the length of fiber extends outside the first partial housing, and
e) mounting said second partial housing to said first partial housing by joining the first and second circumferences together to form a package.

2. The method of claim 1 further comprising the step of hermetically sealing said package.

3. The method of claim 2 wherein said sealing step comprises attaching a cover to said venting opening of said second partial housing.

4. The method of claim 1 wherein said first and said second partial housings comprise each partial complementary feedthrough means that are disposed and sized to form said feedthrough for said at least one optical fiber upon assembly of the package.

5. The method of claim 4 wherein said sealing step comprises sealing said fiber at said feedthrough.

6. The method of claim 5 further comprising the step of sealing said venting opening.

7. The method of claim 5 wherein a sealed casing is applied to said at least one length of optical fiber at step c) of claim 1, said casing being sealed at said feedthrough.

8. A kit for making a package, which package comprises a housing for a fiber optic device and a feedthrough for at least one optical fiber attached to said device, said kit comprising:
a first partial housing having a first circumference,
a second, open partial housing comprising a second circumference complementary to the first circumference of the first partial housing, and a venting opening,
closing means for closing said venting opening, and
means for bonding said first partial housing to said second partial housing to form a package encompassing said device.

9. The kit according to claim 8 wherein at least one of the first partial housing and a second partial housing is ring-shaped.

10. The kit according to claim 8 further comprising a cover that is sized to match and close said venting opening.

11. The kit according to claim 8 wherein said first and said second partial housings have partial feedthrough means disposed at the respective circumferences of said first and second partial housings, the partial feedthrough means being sized and disposed to form said feedthrough for said at least one optical fiber when said package is assembled.
